# EUROPEAN PATENT APPLICATION

(11) **EP 2 762 998 A1**
(43) Date of publication of application: **06.08.2014**
(21) Application number: 14153124.4
(22) Date of filing: 29.01.2014
(51) Int. Cl.: G06F 3/01, G06F 3/03

(54) **PC with integrated motion sensor**

(30) Priority: 31.01.2013 IT AN20130018
(71) Applicant: Riccardi, Luca, 61035 Mondolfo (PS) (IT)
(72) Inventor: Riccardi, Luca, 61035 Mondolfo (PS) (IT)
(74) Representative: Baldi, Claudio

(57) **Abstract**

A PC comprises a monitor (1) that contains a motherboard whereon a CPU, fixed and volatile memories and audio and video cards are mounted; said monitor (1) comprises a display (11) and an external body (2) supporting the display (11) and containing the motherboard. A motion sensor (S) is provided in said external body (2) and connected to said motherboard in such manner to detect the motion of the user's hand and activate a pointing device on the display (11) that follows the motion of the user's hand.

## Description

The present patent application for industrial invention relates to a PC with motion sensor. The PC of the invention falls within the sector of PCs used in working environments in order to provide a control panel used to manage, program and control electrical tools and equipment.

Although the description below refers to control panels used in the dental sector, the present invention is extended to control panels used in any type of sector.

The control panels known in the dental sector are used by the dentist to operate the dental drill unit, which is normally defined as "dentist chair" and consists in a combination of electrical, water and mechanical technologies in a single working unit.

The control panel is normally integrated in a tablet defined as "handpiece delivery unit", which is situated above the patient when the patient lies on the chair. By using the controls provided on the control panel, the dentist decides and controls the operations to be made on the patient, adjusting the speed of the instruments and moving the chair to accommodate the patient to let him get off the chair or place him in the most suitable position according to the operation requirements.

The use of the control panel requires a contact between the operator and the panel. In such a case, before actuating a control on the control panel, the dentist must have his hands free from tools and must touch the panel. Consequently, the dentist's hands do not remain sterile in contact with the control panel. In fact, in spite of being previously sterilized, the control panel may be attacked by bacteria.

Although the most important controls of the control panel are often duplicated in a pedal of the dental drill unit, which can be used by the dentist to control the operation without using his hands, it must be noted that the pedal cannot be used to give all the controls of the control panel.

The purpose of the present invention is to remedy the drawbacks of the prior art by devising a PC with motion sensor, which is able to guarantee a high hygienic level for the operator and keep the operator sterile while using the control panel of the PC.

Another purpose of the present invention is to devise a control panel that provides for quick intuitive use of controls.

The PC of the invention comprises a monitor provided with a motherboard whereon the CPU, fixed and volatile memories, as well as audio and video cards are mounted. The monitor comprises a display and an external body supporting the display and containing the motherboard.

Moreover, the PC comprises a motion sensor disposed in said external body and connected to said motherboard in such manner to detect the motion of the user's hand and activate a pointing device on the display that follows the motion of the user's hand.

The advantages of the PC of the invention are clear, it being possible for the user to give commands to the PC without having to touch the display, a keyboard or a mouse.

For purpose of clarity, the description of the PC according to the present invention continues with reference to the attached drawings, which are intended for purposes of illustration only, and not in a limiting sense, wherein:
- Fig. 1 is a front view of a monitor of the PC according to the present invention, switched off and without the front frame of an external body that supports the display;
- Fig. 2 is a front view of the monitor of Fig. 1, switched on and with the front frame of the external body of the monitor;
- Fig. 3 is a front view of the display of the PC shown in Fig. 2 with a second non-activated area; and
- Fig. 4 is a front view as Fig. 3, wherein the second area of the display is activated.

Referring to the aforementioned figures, the PC of the invention is disclosed.

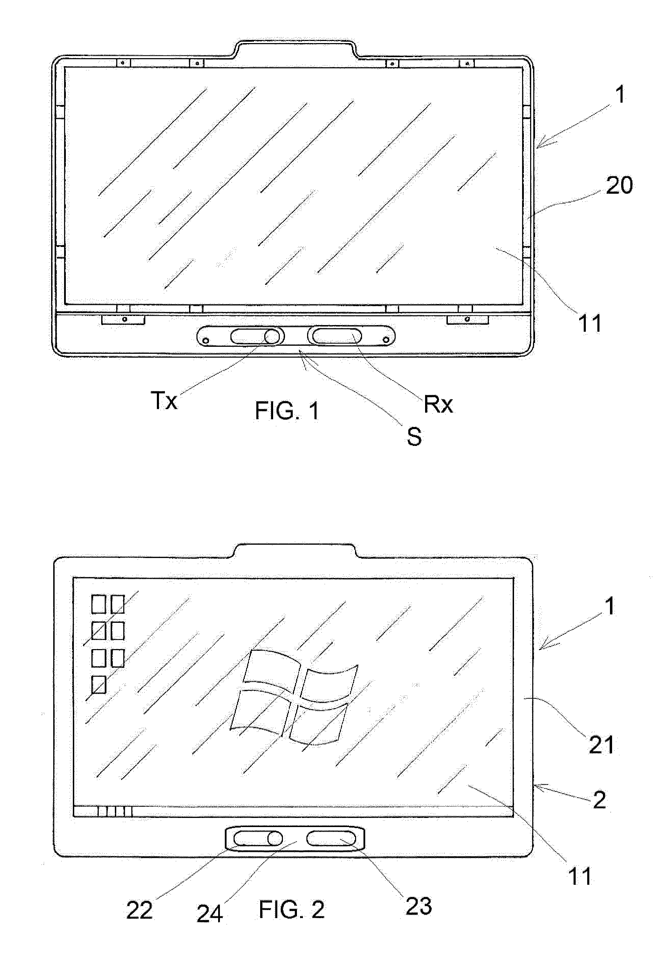

Referring to Figs. 1 and 2, the PC of the invention comprises a monitor (1) that contains a motherboard whereon the typical devices of a PC are mounted, such as CPU, fixed and volatile memories and audio and video cards.

The monitor (1) comprises a display (11) and an external body (2) supporting the display (11) and containing the motherboard with the relevant devices mounted on the motherboard.

Advantageously, the monitor (1) is a flat screen monitor and the display (11) is a touch-screen LED display. However, the PC of the invention may comprise a keyboard and a mouse connected to the monitor (1) by means of USB ports or in wireless mode. In this case, the display does not need to be a touch-screen display.

The external body (2) of the monitor (1) comprises a back box (20) and a front frame (21) coupled with the back box in such manner to frame the display (11). The back box (20) contains the motherboard and the devices mounted on the motherboard that are disposed behind the display (11).

Referring to Fig. 1, the PC of the invention comprises a motion sensor (S) adapted to detect the user's motion. The motion sensor (S) is disposed in the back box (20) of the body under the display (11), preferably in a central position with respect to the length of the display (11). The motion sensor (S) is electrically connected to the motherboard of the PC.

The motion sensor (S) comprises a transmitter (Tx) and a receiver (Rx). The transmitter (Tx) transmits the signal reflected by a moving object, such as the user's hand, and the receiver (Rx) receives the reflected signal, identifying the motion of the user's hand.

Advantageously, the transmitter (Tx) and the receiver (Rx) are of infrared type.

Advantageously, the motion sensor (S) comprises an RGB sensor (Red, Green and Blue LED) and a depth sensor in order to detect images and capture a part of the user's body, such as his hand.

The motion sensor (S) can detect motion at a distance preferably comprised between 0.8 and 3.5 m. The motion sensor (S) has a visual field of 58° H (horizontal), 45° V (vertical), and 70° D (diagonal).

Referring to Fig. 2, the front frame (21) comprises two windows (22, 23) in correspondence of the receiver (Rx) and the transmitter (Tx) of the motion sensor (S) in order to let luminous signals pass. The windows (22, 23) of the external frame are covered by a plate (24) made of transparent material, such as poly-methyl-methacrylate, which acts as protection for the sensor and allows for the passage of a luminous signal.

The PC comprises three selection boards: USBIO24; I/O Relay Board and I/O Combo Board. The selection boards are mounted externally to the PC and are adapted to be connected to the various types of external devices, such as the actuators of the dental drill unit.

The dental drill unit comprises a seat and a back controlled by motors, a water system provided with two electro-valves to feed water to a glass and a bowl, a boiler to heat the water and an operating lamp, such as a scyalitic lamp.

The selection boards comprise relays controlled by means of text files (for example in XML format) to select the various devices of the dental drill unit. In particular, the devices of the dental drill unit managed by the selection boards are: the back motor, the seat motor, the two electro-valves that control the water flow to the bowl and the glass, the boiler and the operating lamp.

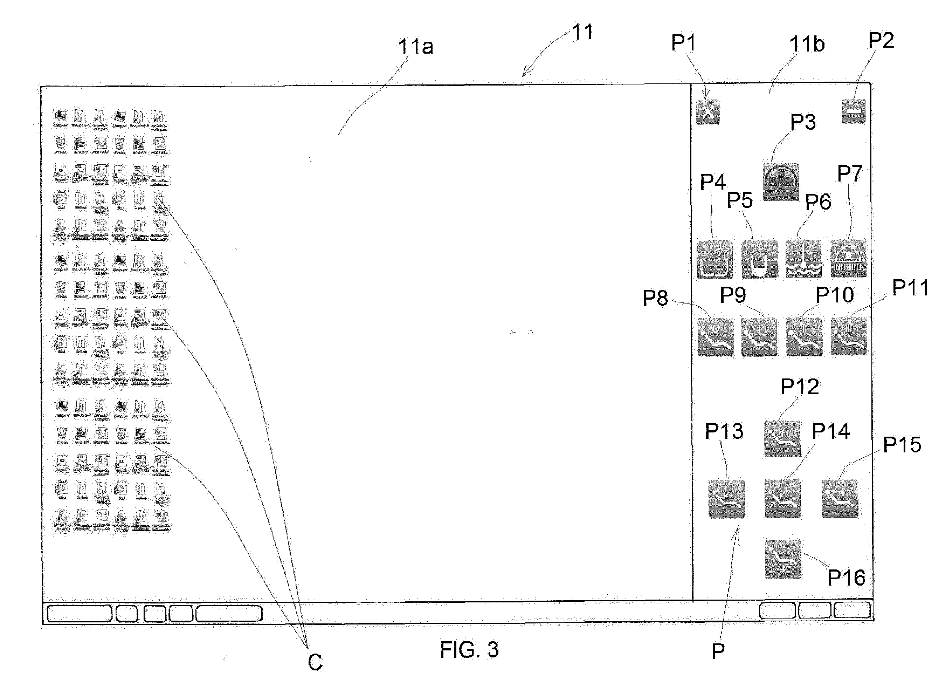

Referring to Fig. 3, the display (11) of the PC is divided into two areas (11a, 11 b), i.e. a first area (11a) that implements a traditional display of a PC and a second area (11b) that implements a control panel. Preferably, the second area (11b) is disposed in the right-hand section of the display and is smaller than the first area (11a).

More precisely, the first area (11a) of the display (11) shows the icons (C) that are typical of a PC, which can be actuated and controlled by the user with a keyboard, a mouse or by tapping the desired icon (C) on the touch-screen display (11).

Vice versa, the second area (11 b) of the display (11) implements a control panel with buttons (P) that correspond to various functions, which can be actuated and controlled by the user by moving his hand inside the operating range of the motion sensor (S).

In particular, the motion sensor (S) recognizes the motion of the user's hand inside its operating range and activates the second area (11 b) of the display (11) in such manner that the buttons (P) shown in said second area (11b) can be selected.

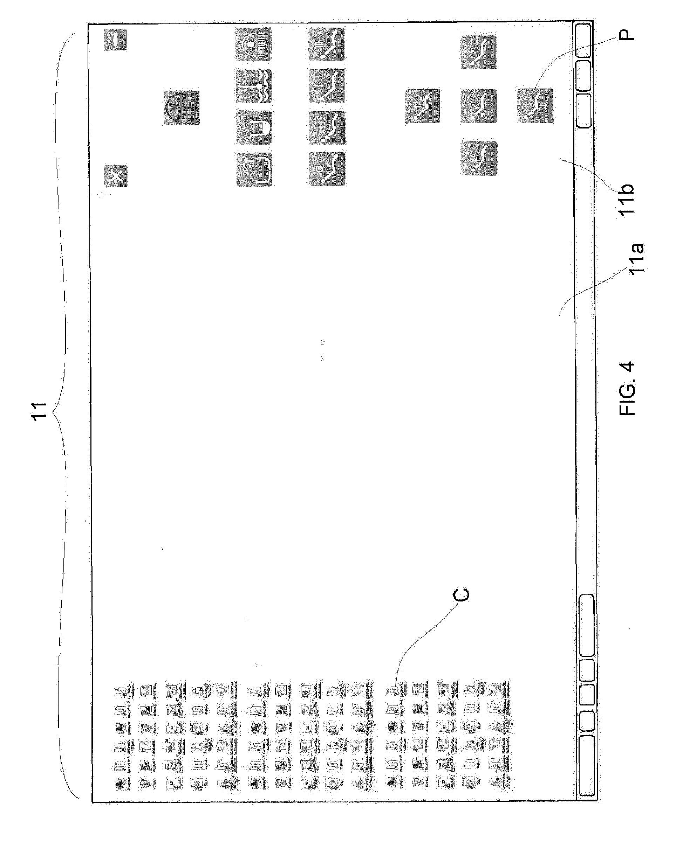

Referring to Fig. 4, when the motion sensor (S) recognizes the motion of the user's hand inside its operating range and activates the second area (11 b) of the display (11), the background of said second area (11b) has the same color as the background of the first area (11a).

In particular, the background of the second area (11 b) of the display is gray, when the second area (11b) is not active and the buttons (P) are not selectable, and is blue when said second area (11 b) is active and the buttons (P) are selectable.

When the second area (11 b) of the display is active, the user's hand becomes a pointing device (for example shaped as a hand) visible in the second area (11b) of the display.

The PC of the invention also comprises a timer adapted to count a time interval in which the pointing device (that corresponds to the user's hand) is contained inside a window of a button (P) that corresponds to the desired function.

In particular, the button (P) is activated when said time interval exceeds a predefined threshold value, set for example at 1 s. In this way, the erroneous activation of a button is prevented.

When the pointing device gets out of the window of the button (P), the time interval calculated by the timer is set at zero.

Referring to Fig. 3, the buttons (P) comprise:
- two buttons (P1, P2) with (X) and (-) that are used to close and iconize the window identified by the second area (11b) of the display;
- one button (P3) that is used to activate a special Anti-Shock position (Trendelenburg position) of the seat and the back of the dental drill unit;
- four buttons (P4, P5, P6, P7) that are used to activate/deactivate the electro-valve of the water in the bowl, activate/deactivate the electro-valve of the water in the glass, activate/deactivate the boiler, and switch on/off the operating lamp, respectively;
- four buttons (P8, P9, P10, P11) where four preset positions of the seat of the dental drill unit are saved, respectively;
- five buttons (P12, P13, P14, P15, P16) that are used to raise the seat, lower the back, place the back of the seat from work position to rinse position and vice versa, raise the back of the chair, and lower the seat of the chair.

Several equivalent modifications can be made to the present embodiment of the invention, within the reach of an expert of the field, while still falling within the scope of the invention described in the attached claims.

## Claims

1. A PC comprising a monitor (1) that contains a mother board whereon CPU, fixed and volatile memories and audio/video cards are mounted; said monitor (1) comprising a display (11) and an external body (2) supporting such display (11) and containing said motherboard, **characterized in that** is comprises a motion sensor (S) disposed in said external body (2) and connected to said motherboard, in such manner to detect the motion of the user's hand and activate a pointing device on the display (11) that follows the motion of the user's hand.

2. The PC of claim 1, wherein said motion sensor (S) is disposed under said display (11) in central position with respect to the length of the display (11).

3. The PC of claim 1 or 2, wherein said external body (2) comprises a back box (20) wherein said motion sensor is mounted and a front frame (21) coupled with the back box and surrounding said display (11), said front frame comprising at least one window (22, 23) in correspondence of the motion sensor (S).

4. The PC of claim 3, wherein said front frame comprises a plate (24) made of transparent material that covers said at least one window (22, 23) in correspondence of the motion sensor (S).

5. The PC of any one of the preceding claims, wherein said motion sensor (S) comprises an IR transmitter (Tx) and receiver (Rx).

6. The PC of any one of the preceding claims, wherein said motion sensor (S) comprises an RGB sensor and a depth sensor.

7. The PC of any one of the preceding claims, wherein said display (11) comprises an area (11 b) implementing a control panel wherein buttons (P) indicative of functions of said control panel are displayed.

8. The PC of claim 7, comprising a timer that counts the time interval in which the pointing device, indicative of the user's hand, is situated inside a window of one of said buttons (P) corresponding to the functions of the control panel and activates said button when the time interval exceeds a predefined threshold value.

9. The PC of any one of the preceding claims, comprising selection cards externally mounted on the PC and comprising relays to control external devices connected to said PC.

10. A dental drill unit comprising a seat and a back controlled by motors, a water system provided with two electro-valves to feed water to a glass and a bowl, a boiler for water heating and an operating lamp, **characterized in that** it comprises the PC of any one of the preceding claims, wherein a control panel is implemented to control the motor of the back, the motor of the seat, the two electro-valves that control the water flow to the bowl and glass, the boiler and the operating lamp.

11. The dental drill unit of claim 10, **characterized in that** said control panel of the PC comprises the following buttons (P):
- a button (P3) to activate a special Anti-Shock position (Trendelenburg position) of the seat and back of the dental drill unit;
- four buttons (P4, P5, P6, P7) respectively used to activate/deactivate the electro-valve of the bowl water, activate/deactivate the electro-valve of the glass water, activate/deactivate the boiler, switch on/off the operating lamp;
- four buttons (P8, P9, P10, P11) wherein four predefined positions of the chair of the dental drill unit are saved, respectively;
- five buttons (P12, P13, P14, P15, P16) respectively used to raise the seat of the chair, lower the back of the chair, move the back of the chair from working position to washing position, and vice versa, raise the back of the chair and lower the seat of the chair.
